# FASCICULE DE BREVET EUROPEEN

(11) **EP 0 603 022 B1**
(45) Date de publication et mention de la délivrance du brevet: **10.04.1996**
(21) Numéro de dépôt: 93402873.9
(22) Date de dépôt: 26.11.1993
(51) Int. Cl.: B60T 13/52, B60T 17/02

(54) **Dispositif de commande d'un système de freinage hydraulique à assistance pneumatique, notamment pour véhicule automobile**
Betätigungseinrichtung für ein hydraulisches Bremssystem mit pneumatischer Unterstützung, insbesondere für ein Kraftfahrzeug
Actuating device for a hydraulic brake system with pneumatic server, in particular for a vehicle

(30) Priorité: 16.12.1992 FR 9215171
(43) Date de publication de la demande: 22.06.1994
(73) Titulaire: AUTOMOBILES PEUGEOT, F-75116 Paris (FR); AUTOMOBILES CITROEN, F-92200 Neuilly sur Seine (FR)
(72) Inventeur: Leroy, Philippe, F-25200 Montbeliard (FR)
(74) Mandataire: Habasque, Etienne Joel Jean-François

(56) Documents cités:
- DE-A- 3 203 400
- DE-A- 3 322 176
- DE-A- 3 842 459

## Description

La présente invention concerne un dispositif de commande d'un système de freinage hydraulique à assistance pneumatique notamment pour véhicule automobile.

Dans les véhicules équipés de systèmes de freinage hydrauliques, l'amplification de l'effort exercé par le conducteur sur la pédale de frein est généralement réalisée par un amplificateur pneumatique dont la source d'énergie est constituée par la dépression agissant sur un piston ou des pistons de cet amplificateur.

Cette dépression peut être fournie soit par la dépression naturelle d'aspiration de l'admission dans le cas où le véhicule est équipé d'un moteur à allumage commandé et papillon de gaz, soit par une pompe à vide animée par un mouvement de rotation issu du moteur du véhicule ou d'un moteur électrique d'entraînement de cette pompe.

On trouvera un exemple d'une installation de freinage pour véhicules automobiles pourvus de moteurs du type OTTO dans le document FR-A-2 300 697.

Dans les dispositifs et installations de ce type, les différents organes sont séparés les uns des autres et sont fixés de manière indépendante dans le compartiment moteur du véhicule. On conçoit alors que ces structures présentent un certain nombre d'inconvénients au niveau de leur encombrement et de la nécessité de prévoir des organes de liaison relativement longs entre ces différents organes.

Le but de l'invention est donc de résoudre ces problèmes.

A cet effet, l'invention a pour objet un dispositif de commande d'un système de freinage hydraulique à assistance pneumatique notamment pour véhicule automobile, du type comportant un maître-cylindre accouplé à un amplificateur pneumatique à dépression relié à une pompe à vide électrique et à des moyens de régulation de la dépression, caractérisé en ce que les moyens de régulation et la pompe sont fixés sur le maître-cylindre.

Avantageusement, des moyens de filtrage de vibrations sont interposés entre la pompe et les moyens de régulation et le maître-cylindre.

L'invention sera mieux comprise à l'aide de la description qui va suivre, donnée uniquement à titre d'exemple et faite en se référant aux dessins annexés, sur lesquels :
- la Fig.1 représente une vue de côté d'un dispositif de commande selon l'invention;
- la Fig.2 représente une vue prise suivant la flèche A de la Fig.1, avec une coupe partielle suivant la ligne 2-2; et
- la Fig.3 représente un schéma synoptique illustrant le fonctionnement d'un dispositif de commande selon l'invention.

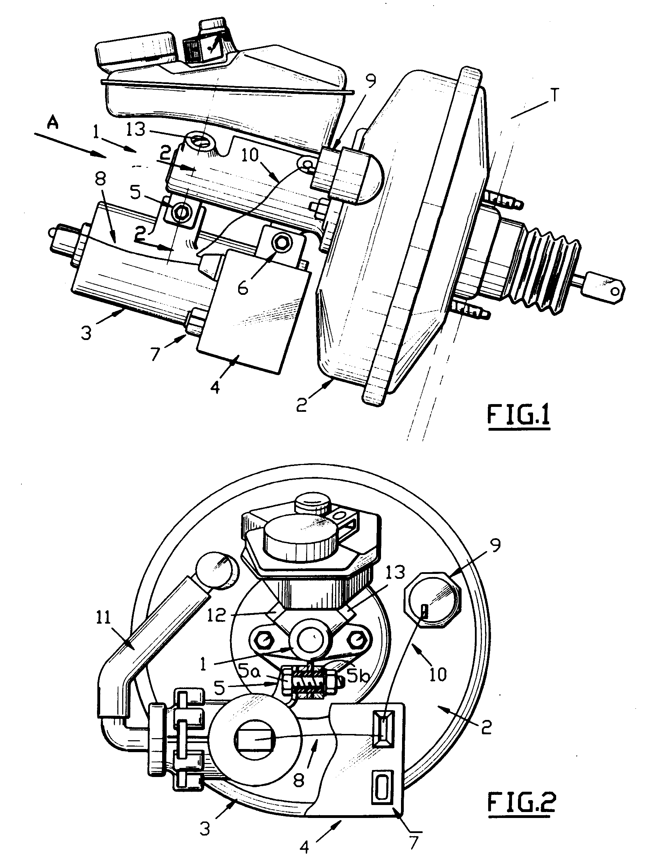

Ainsi qu'on peut le voir sur les figures 1 et 2, un dispositif de commande selon l'invention est adapté pour commander un système de freinage hydraulique à assistance pneumatique, notamment pour véhicule automobile.

Ce dispositif est en fait constitué de plusieurs sous-ensembles accolés les uns aux autres et formant une unité compacte et autonome.

Ce dispositif comporte en effet un maître-cylindre désigné par la référence générale 1 sur ces figures, accouplé à un amplificateur pneumatique 2 à dépression, relié à une pompe à vide électrique 3 et à des moyens de régulation de la dépression dans l'amplificateur, désignés par la référence générale 4.

Selon l'invention, les moyens de régulation et la pompe sont fixés sur le maître-cylindre, par exemple au niveau de deux points d'ancrage 5 et 6. Ces points d'ancrage comprennent avantageusement des pattes complémentaires de la pompe, des moyens de régulation et du maître-cylindre, associées à des boulons correspondants par exemple 5a (Fig.2) comprenant des vis traversant des trous ménagés dans ces pattes d'accrochage et des moyens de filtrage des vibrations sont interposés entre ces organes.

Avantageusement, les moyens de filtrage comprennent des douilles en élastomère par exemple 5b disposées autour des vis de fixation.

Ces moyens permettent de découpler les vibrations engendrées par la rotation de la pompe et réduisent leur transmission au reste du dispositif de freinage et en particulier au maître-cylindre.

Les moyens de régulation 4 sont reliés à une source d'alimentation en énergie constituée par exemple par la batterie du véhicule, par l'intermédiaire d'un connecteur électrique 7.

Par ailleurs, ces moyens de régulation sont également reliés au moteur de la pompe à vide électrique par l'intermédiaire de conducteurs électriques désignés par la référence générale 8 sur cette figure et à un contact à dépression 9 de mesure de la dépression dans l'amplificateur, par l'intermédiaire de conducteurs 10.

La pompe à vide électrique 3 est reliée pneumatiquement à l'amplificateur 2 par l'intermédiaire d'une conduite 11 (Fig.2).

Le maître-cylindre comporte quant à lui de manière classique des sorties par exemple 12 et 13 pour deux circuits hydrauliques reliés aux freins du véhicule.

On conçoit alors que ce dispositif forme un bloc autonome fixé au tablier T séparant le compartiment moteur de l'habitacle du véhicule et relié au reste de celui-ci par l'intermédiaire d'une seule alimentation électrique et de conduites à destination des freins.

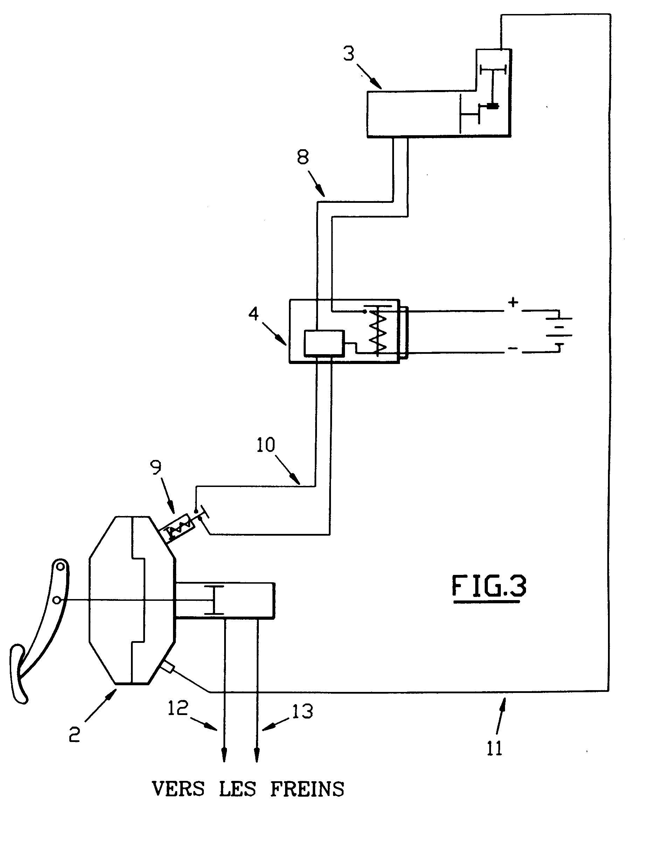

Comme cela est compréhensible au vu de la Fig.3, lorsque le niveau de dépression dans l'amplificateur 2 descend au-dessous d'une valeur de consigne minimale, le contact à dépression 9 déclenche l'alimentation électrique de la pompe à vide électrique 3 à travers les moyens de régulation 4.

Cette pompe provoque une augmentation du niveau de dépression dans l'amplificateur 2 jusqu'à une valeur maximale correspondant à sa capacité et ce pendant un temps de fonctionnement qui peut par exemple être fixé par une horloge électronique contenue dans les moyens de régulation 4. Ceci permet par exemple de limiter le fonctionnement de la pompe entre deux phases de freinage.

Ce dispositif peut être utilisé par exemple dans des véhicules dits "électriques".

## Revendications

1. Dispositif de commande d'un système de freinage hydraulique à assistance pneumatique notamment pour véhicule automobile, du type comportant un maître-cylindre (1) accouplé à un amplificateur pneumatique à dépression (2) relié à une pompe à vide électrique (3) et à des moyens de régulation de la dépression (4), caractérisé en ce que les moyens de régulation et la pompe sont fixés sur le maître-cylindre.

2. Dispositif selon la revendication 1, caractérisé en ce que des moyens de filtrage des vibrations sont interposés entre la pompe et les moyens de régulation et le maître-cylindre.

3. Dispositif selon la revendication 2, caractérisé en ce que les moyens de filtrage comprennent des douilles en élastomère (5b) disposées autour de vis de fixation de la pompe et des moyens de régulation sur le maître-cylindre.

## Claims

1. Actuating device for a servo-assisted hydraulic brake system, in particular for a motor vehicle, of the type comprising a master cylinder (1) coupled to a pneumatic reduced pressure amplifier (2) connected to an electric vacuum pump (3) and to means for regulating the reduced pressure (4), characterised in that the regulating means and the pump are fixed to the master cylinder.

2. Device according to Claim 1, characterised in that means for filtering vibrations are interposed between the pump and the regulating means and the master cylinder.

3. Device according to Claim 2, characterised in that the filtering means comprise elastomeric sleeves (5b) disposed around screws for fixing the pump and regulating means to the master cylinder.

## Patentansprüche

1. Steuervorrichtung für hydraulisches Bremssystem mit Druckluftunterstützung, insbesondere für Kraftfahrzeuge, des Typs mit einem Hauptzylinder (1), der an einen Unterdruck-Druckluftverstärker (2) angeschlossen ist, der mit einer elektrischen Unterdruckpumpe (3) und mit Unterdruck-Einstellmitteln (4) verbunden ist, dadurch gekennzeichnet, daß die Einstellmittel und die Pumpe am Hauptzylinder befestigt sind.

2. Vorrichtung nach Anspruch 1, dadurch gekennzeichnet, daß zwischen der Pumpe und den Einstellmitteln und dem Hauptzylinder Schwingungsfilterungsmittel eingefügt sind.

3. Vorrichtung nach Anspruch 2, dadurch gekennzeichnet, daß die Filterungsmittel elastomere Hülsen (5b) enthalten, die um die Schrauben für die Befestigung der Pumpe und der Einstellmittel am Hauptzylinder angeordnet sind.
